# EUROPÄISCHE PATENTSCHRIFT

(11) **EP 1 338 462 B1**
(45) Veröffentlichungstag und Bekanntmachung des Hinweises auf die Patenterteilung: **05.11.2008**
(21) Anmeldenummer: 03003013.4
(22) Anmeldetag: 12.02.2003
(51) Int. Cl.: B60N 2/00, B60N 2/28, B60R 21/01

(54) **Kindersitz mit drehbaren Transpondern**
Child seat with rotatable transponder
Siège enfant avec transpondeur tournant

(30) Priorität: 22.02.2002 DE 10207581
(43) Veröffentlichungstag der Anmeldung: 27.08.2003
(73) Patentinhaber: ADAM OPEL AG, 65423 Rüsselsheim (DE)
(72) Erfinder: Desch, Kurt, 65439 Flörsheim (DE); Dünnebeil, Joachim, 55218 Ingelheim (DE); Perez, Manuel, Dipl.-Ing., 55128 Mainz (DE)

(56) Entgegenhaltungen:
- EP-A- 0 640 508
- EP-A- 1 180 448
- WO-A-95/05952
- DE-A- 19 930 703
- US-A- 4 936 629
- US-A- 5 851 026
- US-B1- 6 322 142

## Beschreibung

Die Erfindung betrifft einen Kindersitz gemäß dem Oberbegriff des Patentanspruchs 1.

Um einen Kindersitz auch auf dem Beifahrersitz eines Kraftfahrzeuges mit der Rückenlehne in Fahrtrichtung weisend, also in Reboard-Position, einsetzen zu können, muss sichergestellt sein, dass vorhandene Airbags in diesem Bereich bei einem Unfall nicht ausgelöst werden.

Bekanntermaßen wird dies durch den Einbau von Transpondern im Kindersitz und einem korrespondierenden Sensorelement im Fahrzeugsitz erreicht. Das Sensorelement im Fahrzeugsitz ermittelt die Ausrichtung der Transpondereinrichtung und somit des Kindersitzes zur Fahrtrichtung des Kraftfahrzeuges. Die Transponder befinden sich hierbei im Unterteil des Kindersitzes, um sie besonders nahe an dem im Fahrzeugsitz angeordneten Sensorelement anzuordnen. Ein zu großer Abstand zwischen Transponder und Sensorelement würde zu unerwünschten Fehlmessungen führen. Der Sitz kann auf dem Unterteil wahlweise in Fahrtrichtung oder entgegen der Fahrtrichtung aufgesetzt werden.

Ein derartiger Kindersitz mit Transpondern ist in der DE 199 30 703 A1 offenbart. Es handelt sich um einen auf einem Unterteil aufsitzenden Sitz, wobei in dem auf dem Fahrzeugsitz aufgesetzten Unterteil eine Transpondereinrichtung eingesetzt ist. Es ist hierfür auf der Oberseite des Unterteils eine Aufnahme für die Transpondereinrichtung angeordnet. Um den Kindersitz in Reboard-Position zu bringen, muss der Sitz von dem Unterteil gelöst werden und um 180° gedreht wieder auf dem Unterteil montiert werden. Dies ist erforderlich, da das Unterteil aufgrund seiner Keilform nicht mitgedreht werden kann. Es muss somit wie der Sitz auch der Transponder im Unterteil um 180° gedreht werden, so dass das Sensorelement die Drehung des Sitzes erkennt und die Auslösung des Airbags verhindert. Die Transpondereinrichtung wird aus der Aufnahme herausgehoben und um 180° versetzt wieder eingesetzt.

Nachteilig hierbei ist, dass das Drehen des Sitzes auf dem Unterteil einen hohen Montageaufwand bedeutet. Zudem muss die Drehung der Transpondereinrichtung beachtet werden, um die Funktionsfähigkeit der Airbagabschaltung zu gewährleisten. Hierbei besteht zum einen die Möglichkeit, die Transpondereinrichtung aus dem Unterteil zu entfernen und zum anderen die Gefahr einer Beschädigung der Transpondereinrichtung. In beiden Fällen kann es zu einem Ausfall der Erfassung der Ausrichtung des Sitzes kommen. Des weiteren ist eine Verstellung des Sitzes aus einer Sitz- in eine Ruheposition nicht möglich.

Die Aufgabe der Erfindung ist es, einen Kindersitz gemäß dem Oberbegriff des Patentanspruchs 1 zu schaffen, der ein Drehen des Sitzes in die Reboard-Position bei gleichzeitigem Drehen der Transponder im Unterteil mit geringem Montageaufwand ermöglicht.

Erreicht wird dies nach der Erfindung durch einen Kindersitz mit einem Sitz, einem keilförmigen Unterteil sowie einer Vorrichtung zur Erfassung der Ausrichtung des Sitzes im Kraftfahrzeug, wobei diese Vorrichtung zwei unterschiedlich gestaltete Transponder in dem keilförmigen Unterteil und ein Sensorelement zur Erfassung und Unterscheidung der Transponder in einem Fahrzeugsitz beinhaltet und die Transponder drehbar in dem keilförmigen Unterteil angeordnet und durch einen in etwa vertikalen Zapfen derart drehsteif mit dem Sitz verbunden sind, dass die Transponder bei einem Drehen des Sitzes in dem keilförmigen Unterteil mitgedreht werden.

Es werden hierdurch die zuvor beschriebenen Nachteile vermieden, da durch die drehsteife Verbindung von Sitz und Transpondern diese sich beim Drehen des Sitzes im keilförmigen Unterteil mitdrehen. Es ist somit kein zusätzlicher Montageaufwand erforderlich, und die Transponder müssen bei dem Umsetzen des Sitzes nicht aus dem Unterteil herausgehoben werden. Die Tranponder können demnach weder unsachgemäß aus dem Unterteil entfernt, noch bei der Montage beschädigt werden. Durch diese erfindungsgemäße Lösung ist die Funktion der Vorrichtung zur Erfassung der Ausrichtung des Sitzes im Kraftfahrzeug jederzeit sicher gewährleistet.

In einer vorteilhaften Ausführung der Erfindung ist dieser Zapfen an der Unterseite des Sitzes in Längsrichtung verschiebbar geführt. Der Sitz kann somit auf dem am Fahrzeugsitz befestigten Unterteil in unterschiedliche Positionen geschwenkt werden, wobei lediglich der Zapfen in seiner Führung an der Unterseite verschoben wird ohne die Position der Transponder im Unterteil zu verändern. Die Führung des Zapfens an der Unterseite des Sitzes erfolgt zweckmäßigerweise in einer in Längsrichtung angeordneten Führungsschiene.

Der Zapfen ist in einer vorteilhaften Ausführungsform der Erfindung zum Anheben des Sitzes von dem keilförmigen Unterteil in der Vertikalen verschiebbar. Die ist beispielsweise dergestalt verwirklicht, dass der Zapfen an den Transpondern im keilförmigen Unterteil in einem vertikalen Federlager in der Vertikalen verschiebbar geführt ist. Der Sitz wird zur Drehung beispielsweise in die Reboard-Position vom Unterteil gelöst und leicht angehoben, wobei der Zapfen gegen die im Federlager am Zapfen angreifende Federkraft aus dem Unterteil nach oben bewegt wird. Hat der Sitz die gewünschte Position erreicht, wird es auf das Unterteil abgesenkt, wobei der Zapfen durch die Feder wieder nach unten gedrückt wird.

Die Befestigung des Sitzes am Unterteil erfolgt zweckmäßigerweise über mindestens eine schwenkbare Stütze an der Unterseite. In einer Ausführungsform der Erfindung ist der Sitz an seiner Unterseite im Ansatzbereich der Rückenlehne über seitliche Rastbolzen und in seinem vorderen Bereich über eine schwenkbare Stütze mit seitlichen Rastbolzen lösbar mit dem keilförmigen Unterteil verbunden ist, wobei die seitlichen Rastbolzen in entsprechend angeordnete seitliche Aussparungen im keilförmigen Unterteil eingreifen. Die Rastbolzen werden zum Verstellen bzw. zum Drehen des Sitzes aus den seitlichen Aussparungen im Unterteil beispielsweise gegen eine Rückstellfeder herausgedrückt. Der Sitz ist nun beweglich, so dass beispielsweise durch eine Verstellung der schwenkbaren Stütze der Sitz steiler oder flacher gestellt werden kann. Der Sitz ist hierbei um eine an seiner Unterseite im Ansatzbereich der Rückenlehne verlaufende Querachse schwenkbar mit dem keilförmigen Unterteil verbunden und in mindestens zwei Sitzpositionen fixierbar.

Vorteilhafterweise ist eine zusätzliche Babyeinlegeschale für den erfindungsgemäßen Kindersitz derart an die Innenkontur des Sitzes angepasst ausgebildet, dass die Babyeinlegeschale zumindest an mehreren Punkten an der Innenkontur des Sitzes anliegt und sich an dieser abstützt. Die Babyeinlegeschale kann somit ohne zusätzliche Verbindungselemente in den Sitz des Kindersitzes eingesetzt werden und wird durch diesen abgestützt. Die Abstützung an der Innenkontur des Sitzes ist punktuell und/oder flächig ausgebildet. Somit ist der Kindersitz auch für Säuglinge im Alter unter 6 Monaten geeignet, ohne das eine separate Babyschale in das Fahrzeug eingesetzt werden muss.

Zur Vermeidung von separaten Gurten in der Babyeinlegeschale sind Einführschlitze für die im Kindersitz vorhandenen Gurte in der Babyeinlegeschale angeordnet. Die Gurte des eigentlichen Kindersitzes werden durch die Einführschlitze in die Babyeinlegeschale geführt und dienen zum einen der Sicherung eines Säuglings in der Babyeinlegeschale und zum anderen der Verbindung mit dem Sitz. Durch die zu den Rändern der Babyeinlegeschale offenen Einführschlitze ist das Einführen der Gurte in die Babyeinlegeschale ohne Entfernen der Gurtverschlüsse möglich.

Zur idealen Befestigung des Kindersitzes im Kraftfahrzeug ist an der Vorderkante des keilförmigen Unterteiles mindestens eine Lagerbuchse zur Aufnahme eines Stützfußes angeordnet, wobei der Stützfuß den Kindersitz auf dem Kraftfahrzeugboden abstützt. Der Stützfuß wird mit beispielsweise zwei in etwa horizontalen Enden in die entsprechenden Lagerbuchsen des keilförmigen Unterteiles eingesteckt, um ca. 90° umgelenkt und zum Kraftfahrzeugboden geführt. Es ist hierbei bei einer zweckmäßigen Ausführungsform der Erfindung der Stützfuß teleskopierbar ausgebildet, um eine optimale Abstützung auf den jeweiligen Fahrzeugtyp abgestimmt zu erreichen.

Der Kindersitz ist vorteilhafterweise über eine Isofix-Befestigung mit dem Fahrzeugsitz verbunden ist, die auf der Rückseite des keilförmigen Unterteils angeordnet ist. Die bekannte Isofix-Befestigung stellt hierbei eine sichere und zugleich mühelos durchzuführende Befestigung dar. Der Kindersitz ist mit entsprechenden Vorrichtungen zum Aus- und Einfahren sowie zum Ver- und Entriegeln der Isofix-Befestigung an entsprechenden Befestigungspunkten am Fahrzeugsitz ausgestattet.

Eine weitere Abstützung des Kindersitzes am Fahrzeugsitz wird zweckmäßigerweise durch einen in etwa vertikalen an der Rückseite des keilförmigen Unterteils angeordneten Bügel erreicht, der am Kraftfahrzeugsitz anliegt.

Eine vorteilhafte Ausführungsform der Erfindung ist so ausgebildet, dass im Sitz ein Rohrrahmen integriert ist, an dem die Verbindungselemente zum keilförmigen Unterteil befestigt sind. So sind beispielsweise die Führungen der seitlichen Rastbolzen über Laschen fest mit dem Rohrrahmen verbunden. Diese Konstruktion ist besonders robust, da die am Kindersitz über die Rastbolzen angreifenden Kräfte direkt in den stabilen Rohrrahmen eingeleitet werden.

Ein Ausführungsbeispiel der Erfindung ist nachstehend anhand von Zeichnungen näher beschrieben. Es zeigen
- Fig. 1: den erfindungsgemäßen Kindersitz in einer seitlich perspektivischen Ansicht;
- Fig. 2: das Unterteil des Kindersitzes in perspektivischer Ansicht;
- Fig. 3: die Transpondereinrichtung mit am Sitzunterteil angreifendem Zapfen;
- Fig. 4: die Babyeinlegeschale;
- Fig. 5: den Stützfuß des Kindersitzes.

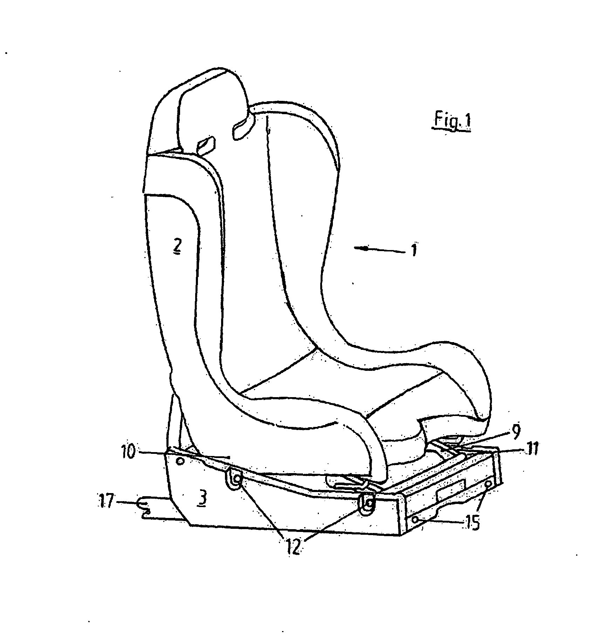

Figur 1 zeigt den Kindersitz 1 bestehend aus dem oben angeordneten Sitz 2 befestigt auf dem Unterteil 3. Die Befestigung erfolgt über Rastbolzen 11, welche in seitlich im Unterteil angeordnete Aussparungen 12 innenseitig eingreifen. Vorne an der Unterseite des Sitzes 2 ist eine schwenkbare Stütze 9 angelenkt.

Der Sitz 2 ist um eine an seiner Unterseite im Ansatzbereich der Rückenlehne (10) verlaufende Querachse schwenkbar. Dargestellt ist hier eine Montage in Fahrtrichtung. Am Unterteil 3 sind seitlich mehrere Aussparungen 12 angeordnet. In der zeichnerisch dargestellten Position können die hinteren Rastbolzen 11 aus den mittleren Aussparungen 12 herausgezogen und in die hinteren Aussparungen 12 eingeführt werden. Dabei werden die Rastbolzen 11 in Führungsrinnen 19 zu den hinteren Aussparungen 12 geführt. Die schwenkbare Stütze 9 legt sich hierbei flach an das Unterteil 3 an, wodurch der Sitz in die Vertikale gekippt wird.

An der Rückseite des Unterteils 3 sind Isofix-Verbindungen 17 ausgefahren. An der Vorderseite des Unterteils sind zwei Lagerbuchsen 15 zur Aufnahme des Stützfußes 16 horizontal angeordnet.

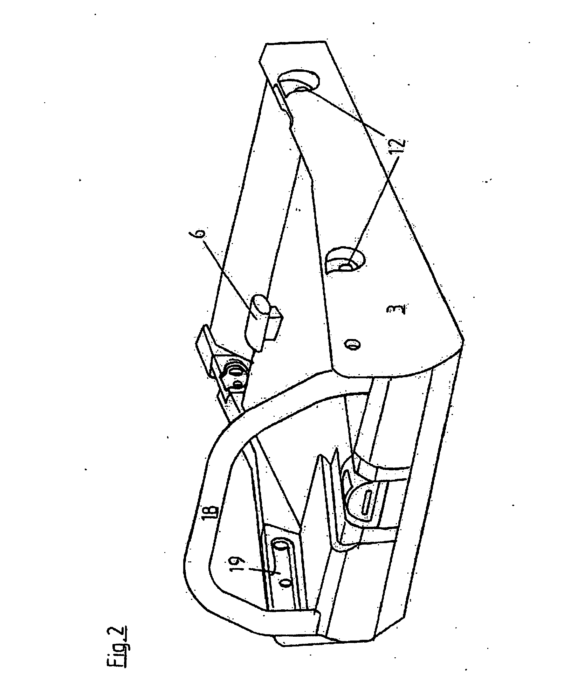

Figur 2 zeigt das Unterteil 3 ohne den Sitz 2. Es ist das obere Ende des Zapfens 6 erkennbar, welches an eine Führungsschiene 7 in der Unterseite des Sitzes 2 angepasst ist. Eine Sicherung gegen ein Verdrehen des Zapfens 6 relativ zum Sitz 2 ist durch den rechteckigen Querschnitt des oberen Zapfenkopfes gegeben. An der Rückseite des Unterteils 3 ist oberseitig ein Bügel 18 angeordnet, mit welchem sich das Unterteil an der Rückenlehne des Fahrzeugsitzes abstützt.

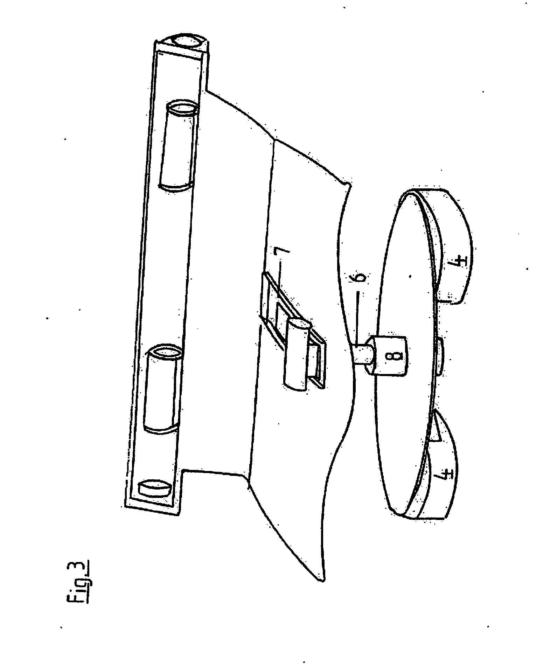

Figur 3 zeigt die Transponder 4 drehsteif verbunden mit dem Zapfen 6 über ein Federlager 8. Durch die in der Hülse des Federlagers 8 vertikal angeordnete Feder kann der Zapfen 6 vertikal nach oben gegen die Federkraft aus dem Federlager 8 gezogen werden. Der Zapfen 6 ist in der Führungsschiene 7 in Längsrichtung des Kindersitzes 1 verschiebbar bei entsprechender Verschiebung des Sitzes 2 auf dem Unterteil 3 beim Kippen des Sitzes 2.

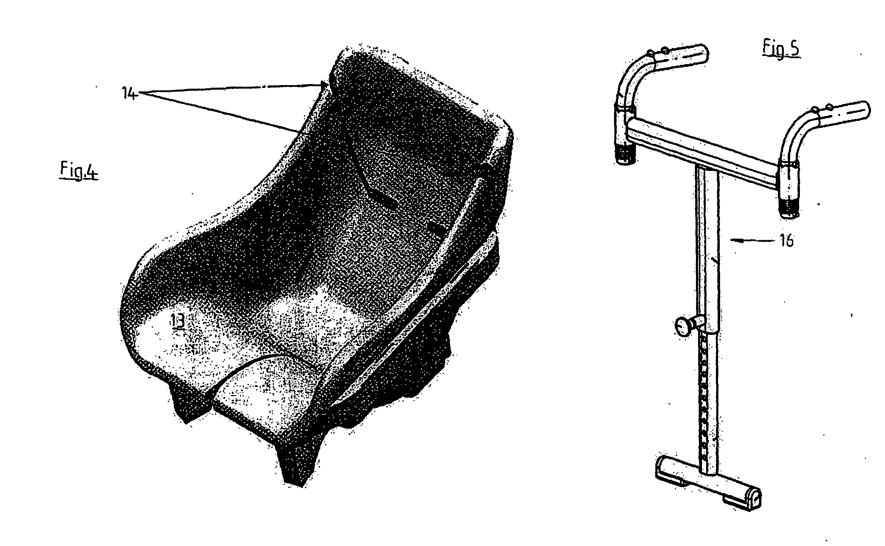

In Figur 4 ist die Babyeinlegeschale 13 dargestellt. Diese weist seitlich und unterseitig Stützelemente zum Abstützen an der Innenkontur des Sitzes 2 auf, so dass sie passgenau in den Sitz 2 einsetzbar ist. Es sind drei Einführschlitze 14 für die Gurte des Kindersitzes in der Babyeinlegeschale angeordnet.

Schließlich ist der Stützfuß 16 in Figur 5 dargestellt. Er weist an seinem oberen Ende zwei horizontale Endstücke auf, welche in entsprechende Lagerbuchen 15 im Unterteil 3 eingreifen. Der in etwa vertikal angeordnete Stützfuß 16 ist telekopierbar ausgebildet, um eine exakte Anpassung an die erforderliche Stützhöhe vornehmen zu können.

### Bezugszeichenliste

- Kindersitz: (1)
- Sitz: (2)
- keilförmigen Unterteil: (3)
- Transponder: (4)
- Sensorelement: (5)
- Zapfen: (6)
- Führungsschiene: (7)
- Federlager: (8)
- schwenkbare Stütze: (9)
- Ansatzbereich der Rückenlehne: (10)
- Rastbolzen: (11)
- Aussparungen: (12)
- Babyeinlegeschale: (13)
- Einführschlitze: (14)
- Lagerbuchsen: (15)
- Stützfuß: (16)
- Isofix-Befestigung: (17)
- Bügel: (18)
- Führungsrinnen: (19)

## Patentansprüche

1. Kindersitz (1) mit einem Sitz (2), einem keilförmigen Unterteil (3) sowie einer Vorrichtung zur Erfassung der Ausrichtung des Sitzes (2) im Kraftfahrzeug, wobei diese Vorrichtung zwei unterschiedlich gestaltete Transponder (4) in dem keilförmigen Unterteil (3) und ein Sensorelement (5) zur Erfassung und Unterscheidung der Transponder (4) in einem Fahrzeugsitz beinhaltet, **dadurch gekennzeichnet, dass** die Transponder (4) drehbar in dem keilförmigen Unterteil (3) gelagert sind und durch einen in etwa vertikalen Zapfen (6) derart drehsteif mit dem Sitz (2) verbunden sind, dass die Transponder (4) bei einem Drehen des Sitzes (2) in dem keilförmigen Unterteil (3) mitgedreht werden.

2. Kindersitz (1) nach Anspruch 1, **dadurch gekennzeichnet, dass** der Zapfen (6) an der Unterseite des Sitzes (2) in Längsrichtung verschiebbar geführt ist.

3. Kindersitz (1) nach einem der Ansprüche 1 und 2, **dadurch gekennzeichnet, dass** der Zapfen (6) an der Unterseite des Sitzes (2) in einer in Längsrichtung angeordneten Führungsschiene (7) verschiebbar geführt ist.

4. Kindersitz (1) nach mindestens einem der vorhergehenden Ansprüche, **dadurch gekennzeichnet, dass** der Zapfen (6) zum Anheben des Sitzes (2) von dem keilförmigen Unterteil (3) in der Vertikalen verschiebbar ist.

5. Kindersitz (1) nach mindestens einem der vorhergehenden Ansprüche, **dadurch gekennzeichnet, dass** der Zapfen (6) an den Transpondern (4) im keilförmigen Unterteil (3) in einem vertikal ausgerichteten Federlager (8) verschiebbar geführt ist.

6. Kindersitz (1) nach mindestens einem der vorhergehenden Ansprüche, **dadurch gekennzeichnet, dass** der Sitz (2) an seiner Unterseite über mindestens eine schwenkbare Stütze (9) lösbar mit dem keilförmigen Unterteil (3) verbunden ist.

7. Kindersitz (1) nach mindestens einem der vorhergehenden Ansprüche, **dadurch gekennzeichnet, dass** der Sitz (2) an seiner Unterseite im Ansatzbereich der Rückenlehne (10) über seitliche Rastbolzen (11) und in seinem vorderen Bereich über eine schwenkbare Stütze (9) mit seitlichen Rastbolzen (11) lösbar mit dem keilförmigen Unterteil (3) verbunden ist, wobei die seitlichen Rastbolzen (11) in entsprechend angeordnete seitliche Aussparungen (12) im keilförmigen Unterteil (3) eingreifen.

8. Kindersitz (1) nach mindestens einem der vorhergehenden Ansprüche, **dadurch gekennzeichnet, dass** der Sitz (2) um eine an seiner Unterseite im Ansatzbereich der Rückenlehne (10) verlaufende Querachse schwenkbar mit dem keilförmigen Unterteil (3) verbunden und in mindestens zwei Sitzpositionen fixierbar ist.

9. Kindersitz (1) nach mindestens einem der vorhergehenden Ansprüche, **dadurch gekennzeichnet, dass** eine zusätzliche Babyeinlegeschale (13) derart an die Innenkontur des Sitzes (2) angepaßt ausgebildet ist, dass die Babyeinlegeschale (13) zumindest an mehreren Punkten an der Innenkontur des Sitzes (2) anliegt und sich an dieser abstützt.

10. Kindersitz (1) nach Anspruch 9, **dadurch gekennzeichnet, dass** die Babyeinlegeschale (13) Einführschlitze (14) für die im Kindersitz (1) vorhandenen Gurte aufweist.

11. Kindersitz (1) nach mindestens einem der vorhergehenden Ansprüche, **dadurch gekennzeichnet, dass** an der Vorderkante des keilförmigen Unterteiles (3) mindestens eine Lagerbuchse (15) zur Aufnahme eines Stützfußes (16) angeordnet ist, wobei der Stützfuß (16) den Kindersitz (1) auf dem Kraftfahrzeugboden abstützt.

12. Kindersitz (1) nach Anspruch 11, **dadurch gekennzeichnet, dass** der Stützfuß (16) teleskopierbar ausgebildet ist.

13. Kindersitz (1) nach mindestens einem der vorhergehenden Ansprüche, **dadurch gekennzeichnet, dass** der Kindersitz (1) über eine Isofix-Befestigung (17) mit dem Fahrzeugsitz verbunden ist, die auf der Rückseite des keilförmigen Unterteils (3) angeordnet ist.

14. Kindersitz (1) nach mindestens einem der vorhergehenden Ansprüche, **dadurch gekennzeichnet, dass** an der Rückseite des keilförmigen Unterteils (3) ein in etwa vertikaler Bügel (18) angeordnet ist, der zur Abstützung des Kindersitzes (1) am Kraftfahrzeugsitz anliegt.

15. Kindersitz (1) nach mindestens einem der vorhergehenden Ansprüche, **dadurch gekennzeichnet, dass** im Sitz (2) ein Rohrrahmen integriert ist, an dem die Verbindungselemente zum keilförmigen Unterteil (3) befestigt sind.

## Claims

1. Child seat (1) equipped with a seat (2), a cuneiform underpart (3) and a device to determine the orientation of the seat (2) in a motor vehicle, wherein this device is equipped with two differently designed transponders (4) in the cuneiform underpart (3) and with a sensor element (5) to determine and differentiate the transponders (4) in the seat of a motor vehicle, **characterized in that** the transponders (4) are pivoted in the cuneiform underpart (3) and torsion proof connected with the seat (2) by a nearly vertical pivot (6) so that the transponders (4) are rotated with the seat (2) in the cuneiform underpart (3) when it is rotated.

2. Child seat (1) according to claim 1, **characterized in that** the pivot (6) on the underpart of the seat (2) can be moved along the longitudinal direction.

3. Child seat (1) according to the claims 1 and 2, **characterized in that** the pivot (6) on the underpart of the seat (2) can be moved in the longitudinally aligned guide bar (7).

4. Child seat (1) according to at least one of the preceding claims, **characterized in that** the pivot (6) is vertically movable in order to lift the seat (2) from the cuneiform underpart (3).

5. Child seat (1) according to at least one of the preceding claims, **characterized in that** the pivot (6) on the transponders (4) in the cuneiform underpart (3) is movable in a vertically aligned springer hanger (8).

6. Child seat (1) according to at least one of the preceding claims, **characterized in that** the seat (2) on the underpart is connected with the cuneiform underpart (3) by at least one pivoting support (9).

7. Child seat (1) according to at least one of the preceding claims, **characterized in that** the seat (2) on its underpart at the insertion area of the seat-back is connected with the cuneiform underpart (3) by lateral locking pins (11) and on the frontal area it is connected by pivoted support (9) detachable with lateral locking pins (11), wherein the lateral locking pings (11) gear into the respectively aligned lateral openings (12) in the cuneiform underpart (3).

8. Child seat (1) according to at least one of the preceding claims, **characterized in that** the seat (2) is movably connected with the cuneiform underpart (3) by a diagonal axis extending on its underpart in the insertion area of the seat back (10) and can be fixed in at least two seating positions.

9. Child seat (1) according to at least one of the preceding claims, **characterized in that** an additional baby safety seat (13) is adapted to the internal contour of the seat (2) so that the baby safety seat (13) fits with the internal contour of the seat (2) on several points and it is supported by it.

10. Child seat (1) according to claim 9, **characterized in that** the baby safety seat (13) is equipped with insertion slots (14) for the strap in the child seat (1).

11. Child seat (1) according to at least one of the preceding claims, **characterized in that** on the leading edge of the cuneiform underpart (3) there is at least one bearing sleeve (15) aligned in which to insert an outrigger (16) wherein the outrigger (16) supports the child seat (1) on the floor of the motor vehicle.

12. Child seat (1) according to claim 11, **characterized in that** the outrigger (16) is designed telescopically.

13. Child seat (1) according to at least one of the preceding claims, **characterized in that** the child seat (1) is connected with the car seat by an isofix fastening (17) which is aligned on the rear side of the cuneiform underpart (3).

14. Child seat (1) according to at least one of the preceding claims, **characterized in that** on the rear side of the cuneiform underpart (3) there is a vertical holder (18) which lies against the seat of the motor vehicle to support the child seat (1).

15. Child seat (1) according to at least one of the preceding claims, **characterized in that** in the seat (2) a tube frame is integrated, on which the connecting elements are fastened on the cuneiform underpart (3).

## Revendications

1. Siège pour enfants (1) avec un siège (2), dont la partie inférieure est cunéiforme(3) ainsi qu'un dispositif pour le réglage du siège (2) dans le véhicule; ce dispositif contient deux transpondeurs présentés de manière différente (4) dans la partie inférieure cunéiforme (3) et un élément sensor (5) pour la saisie et la différenciation des transpondeurs (4) dans un siège de véhicule, **caractérisé en ce que** les transpondeurs (4) sont stockés et orientables dans la partie inférieure cunéiforme (3) et reliés par un pivot vertical (6) tellement raide à tourner avec le siège (2) que les transpondeurs (4) tournent en même temps que le siège (2) dans la partie inférieure cunéiforme (3).

2. Siège pour enfants (1) selon revendication 1, **caractérisé en ce que** le pivot (6) au dessous du siège (2) est coulissant dans le sens longitudinal.

3. Siège pour enfants (1) selon revendications 1 et 2, **caractérisé en ce que** le pivot (6) au dessous du siège (2) est coulissant dans un rail de retenue disposé (7) dans le sens longitudinal.

4. Siège pour enfants (1) selon au moins l'une des revendications précédentes, **caractérisé en ce que** le pivot (6) est coulissant à la verticale pour soulever le siège (2) de la partie inférieure cunéiforme(3).

5. Siège pour enfants (1) selon au moins l'une des revendications précédentes, **caractérisé en ce que** le pivot (6) dans la partie inférieure cunéiforme (3) aux transpondeurs (4) s'effectue en coulissant sur un palier à ressort vertical (8).

6. Siège pour enfants (1) selon au moins l'une des revendications précédentes, **caractérisé en ce que** le siège (2) est relié dans sa partie inférieure par au moins un support pivotant (9) détachable de la partie inférieure cunéiforme (3).

7. Siège pour enfants (1) selon au moins l'une des revendications précédentes, **caractérisé en ce que** le dessous du siège (2) soit à portée du dossier de siège (10) et relié par des boulons à crans latéraux (11), et en sa partie avant, par un support pivotant (9) avec des boulons à crans latéraux (11) détachable de la partie inférieure cunéiforme (3) où les boulons à crans latéraux (11) interfèrent dans les encoches latérales disposés en conséquence (12) dans la partie inférieure cunéiforme (3).

8. Siège pour enfants (1) selon au moins l'une des revendications précédentes, **caractérisé en ce que** le siège (2) est relié dans sa partie inférieure autour de l'un des axes transversaux à portée du dossier de siège (10), pivotant avec la partie inférieure cunéiforme (3) et pouvant être fixé dans au moins deux positions de siège.

9. Siège pour enfants (1) selon au moins l'une des revendications précédentes, **caractérisé en ce que** une coque supplémentaire pour bébé (13) peut être ajustée au contour intérieur du siège (2) de façon à ce que la coque supplémentaire pour bébé (13) adhère tout au moins à plusieurs points du contour intérieur du siège (2) et s'appuie à celui-ci.

10. Siège pour enfants (1) selon revendication 9, **caractérisé en ce que** la coque pour bébé présente (13) des fentes (14) dans le siège pour enfants pour (1) des sangles éventuelles.

11. Siège pour enfants (1) selon au moins l'une des revendications précédentes, **caractérisé en ce que** sur la bordure avant de la partie inférieure cunéiforme, (3) au moins une coquille (15) est disposée à accueillir un pied d'appui (16), où le pied d'appui (16) maintient le siège pour enfants (1) sur le sol du véhicule.

12. Siège pour enfants (1) selon revendication 11, **caractérisé en ce que** le pied d'appui (16) se présente sous une forme télescopique.

13. Siège pour enfants (1) selon au moins l'une des revendications précédentes, **caractérisé en ce que** le siège pour enfants (1) est relié par une fixation Isofix (17) au siège du véhicule, celle-ci étant placée au verso de la partie inférieure cunéiforme (3).

14. Siège pour enfants (1) selon au moins l'une des revendications précédentes, **caractérisé en ce que** au verso de la partie inférieure cunéiforme (3) un étrier vertical (18) soit placé, celui-ci étant ajusté pour le maintien du siège pour enfants (1) au siège du véhicule.

15. Siège pour enfants (1) selon au moins l'une des revendications précédentes, **caractérisé en ce que** dans le siège (2) un cadre tubulaire est intégré, auquel les éléments d'assemblage sont fixés à la partie inférieure cunéiforme (3).
